# EUROPÄISCHE PATENTSCHRIFT

(11) **EP 1 719 852 B1**
(45) Veröffentlichungstag und Bekanntmachung des Hinweises auf die Patenterteilung: **17.07.2013**
(21) Anmeldenummer: 06113436.7
(22) Anmeldetag: 03.05.2006
(51) Int. Cl.: E04C 5/20, F24D 3/14, E04B 5/48

(54) **Abstandshalter für ein Bewehrungselement eines Stahlbeton-Bauteils, insbesondere einer Stahlbetondecke**
Spacer for a reinforcement of a reinforced-concrete element, in particular of a reinforced-concrete floor
Distanceur d'armature d'élément en béton armé, en particulier d'un plancher en béton armé

(30) Priorität: 03.05.2005 EP 05103681
(43) Veröffentlichungstag der Anmeldung: 08.11.2006
(73) Patentinhaber: Uponor Innovation AB, 73061 Virsbo (SE)
(72) Erfinder: Lipinski, Johann, D-22926 Ahrensburg (DE)
(74) Vertreter: Epping - Hermann - Fischer

(56) Entgegenhaltungen:
- EP-A- 0 992 637
- EP-A- 1 134 502
- WO-A-86/04105
- DE-A1- 10 150 217
- DE-B- 1 280 531

## Beschreibung

Die Erfindung betrifft einen Abstandshalter für ein Bewehrungselement eines Stahlbeton-Bauteils bzw. Fertigbauteils, bei dem es sich insbesondere um eine Stahlbetondecke handelt.

Stahlbeton-Bauteile (vor Ort gegossen oder als Fertigbauteile an den Verbauungsort geliefert) weisen zur Erhöhung ihrer Stabilität Bewehrungselemente beispielsweise in Form von Gittermatten aus Eisen o.dgl. Metall auf. Im Falle von Stahlbetondecken ruht eine derartige Gittermatte auf Abstandshaltern, die ihrerseits auf der Schalung aufliegen und somit das Bewehrungselement in einer definierten Lage halten, wenn die Stahlbetondecke gegossen wird und abbindet bzw. schwindet. Zumeist sind bei Stahlbetondecken zwei Bewehrungselementlagen vorgesehen, wobei beide zumeist als Gitter ausgebildete Bewehrungselemente auf unterschiedlich hohen Abstandshaltern ruhen.

Ein Beispiel für eine Stahlbetondecke (mit integrierter Fußbodenheizung) ist in DE-C-34 03 831 beschrieben. In dieser Druckschrift ist das Fußbodenheizungsrohr an dem oberen Bewehrungsgitter befestigt. Beispiele von Betonfußböden oder Stahlbetondecken mit auf mittlerer Höhe des Stahlbeton-Fertigteils angeordneten Rohren sind in DE-C-39 09 729, DE-A-198 32 289, DE-U-298 08 790 und WO-A-02/04869 beschrieben.

Bei den Stahlbeton-Bauteilen, wie sie in den vorstehend aufgelisteten Schriften beschrieben sind, sind separate Elemente zur Befestigung bzw. Anordnung der Rohre innerhalb des Bewehrungssystem des Stahlbeton-(Fertig-)Bauteils erforderlich.

Aus EP-A-1 207 354 und DE-A-102 53 867 ist es ferner bekannt, bei Betonfußböden oder Stahlbetondecken die Abstandshalter für das untere Bewehrungsgitter zur Fixierung von Rohren zu nutzen.

Die bekannten Bewehrungssysteme für Stahlbeton-Fertigteile und insbesondere für Betonfußböden bzw. Stahlbetondecken können insofern problematisch sein, als die Gefahr eines Durchhängens der unteren Bewehrungselemente gegeben ist, wenn die diskreten einzelnen Abstandshalter zu weit voneinander beabstandet angeordnet sind. Eine Erhöhung der Anordnungsdichte der Abstandshalter wiederum ist material- und montageaufwendig, was von Nachteil ist.

Aus EP-A-1 134 502 ist ein Gitter zur Fixierung von Rohren in einer Fahrbahn bekannt, das keine Aufnahmemöglichkeiten für Bewehrungselemente oder dergleichen Versteifungsstrukturen der Fahrbahn aufweist.

EP-A-0 992 637 beschreibt eine Fixierstruktur für in einem Betonbauteil verlaufende Rohre, wobei diese Haltestruktur aus einzelnen Leisten mit nach unten offenen Rohraufnahmen besteht.

Schließlich beschreibt die DE-B-12 80 531 einen Abstandshalter für sich kreuzende Betonbewehrungsstäbe. Für die Aufnahme von ein Kühl- oder Heizmedium aufweisende Rohre ist der bekannte Abstandshalter nicht zu verwenden und auch nicht vorgesehen.

Die DE 10150217 A1 zeigt ein längliches Halteelement mit einer Unterseite und eine dieser gegenüberliegenden Oberseite. In die Oberseite sind in Querrichtung verlaufende, zur Oberseite hin offene Aufnahmen für längliche Elemente eingebracht. Die Oberseite ist als Auflage- und Befestigungsfläche für in Querrichtung verlaufende Flächenelemente ausgebildet, die sich in Querrichtung über die Oberseite hinaus erstrecken.

Die Druckschrift WO 86/04105 zeigt ein Positionierungselement für den Transport und die Positionierung von Bewehrungsträgern an einer Betonbewehrungsstruktur. Das Positionierungselement umfasst einen länglichen Körper mit senkrecht zur Längsrichtung gleichmäßig verteilten Rillen. Nuten tragen bei zur Verstärkung jeweils Bewehrungsträger.

EP 1134502 A2 zeigt ein System, um Schläuche, Rohre oder andere Leitungen oder längliche Elemente auf einer Unterlage zu befestigen, auf der noch eine Materialschicht aufgebracht werden wird. Das System ist aus Streifen geformt und umfasst Öffnungen oder Aussparungen, die bei ihrer Verwendung einen Teil eines Schlauches, eines Rohres, einer Leitung oder eines anderen länglichen Elementes aufnehmen und diese Teile nahezu parallel zu der Unterlage fixiert werden. Dabei nimmt die Dicke der Streifen um Kanten der Öffnungen oder Aussparungen hin zu. EP 1134502 A2 offenbart einen Abstandshalter der alle Merkamle des Obergegriffs des Anspruchs 1 hat.

Aufgabe der Erfindung ist es, einen verbesserten Abstandshalter für ein Bewehrungselement eines Stahlbeton-Bauteils zu schaffen, mit dem sowohl die Montage des Bewehrungssystems des Stahlbeton-Bauteils als auch die Montage von Rohren, die zur Temperierung des Stahlbeton-Bauteils von einem temperierbaren Medium durchströmbar sind, vereinfacht ist, ohne dass die Funktionstüchtigkeit des Bauteils durch den Abstandshalter beeinträchtigt ist.

Diese Aufgabe wird erfindungsgemäß bei einem Abstandshalter der eingags genannten Art durch die kennzeichnenden Merkmale des Anspruchs 1 gelöst.

Der erfindungsgemaßc Abstandshalter weist mindestens ein Gitterelement vorzugsweise aus Kunststoffmaterial auf, das mehrere sich kreuzende Streben aufweist. Das Gitterelement liegt mit einer seiner Seiten auf der Schalung zur Herstellung des Stahlbeton-Fertigteils auf. An dieser Seite (nachfolgend mit erste Seite bezeichnet) befinden sich Auflagepunkte, die eine erste Auflageebene definieren. An der anderen (zweiten) Seite des Gitterelements definieren Abstützpunkte eine Stützebene des Gitterelements zur Abstützung eines Bewehrungselements des Stahlbeton-Fertigteils, bei dem es sich im Falle einer Stalilbetondecke bzw. einem Betonfußboden um beispielsweise ein bzw. das untere Bcwehrungsgitter handelt. Durch die großflächige Ausbildung des Abstandshalters als Gitterelement wird das Bewehrungselement großflächig abgestützt, wodurch ein Durchhängen des Bewehrungselements verhindert wird. Mehrere Gitterelemente können nebeneinander liegend und vorzugsweise untereinander verbunden ausgelegt werden, so dass das Bewehrungselement über nahezu seine gesamte Erstreckung abgestützt ist. Damit ist eine einfache Montage des Bewehrungssystems gegeben.

Ferner wird durch die erfindungsgemäß vorgesehene Ausbildung der ersten Auflagepunkte des Gitterelements an nur einigen (insbesondere wenigen) dersich kreuzenden Streben erreicht, dass lediglich ein reduzierter Einsatz (vorzugsweise Kunststoffmaterial) für das Gitterelement erforderlich ist. Eine Vielzahl der Streben weist nämlich erfindungsgemäß einen Abstand zur ersten Auflageebene auf. Damit kontaktieren also diese Streben die Schalung, auf der das Gitterelement bei der Herstellung eines Stahlbeton-Bauteils aufliegt, nicht. Das wiederum wirkt sich neben der Materialreduktion auch vorteilhaft aus, was die Erkennbarkeit der Einbettung des Gitterelements in dem Stahlbeton-Bauteil betrifft; denn in der Unterseite des Stahlbeton-Bauteils sind jetzt nur diejenigen Streben zu erkennen, über die das Gitterelement auf der Schalung aufliegt. Das hat neben der Materialreduktion darüber hinaus den Vorteil, dass Brandschutzbestimmungen auf einfachere Art und Weise eingehalten werden können, denn die "Verunreinigungen" des Stahlbeton-Bauteils mit dem erfindungsgemäßen Abstandshalter sind durch die reduzierte Materialmenge ebenfalls minimiert, was sich z.B. für die Einhaltung der Brandschutzbedingungen vorteilhaft erweist.

Erfindungsgemäß dient das mindestens eine Gitterelement aber auch der Fixierung von von einem temperierbaren Medium durchströmbaren Rohren. Pro Gitterelement können ein oder mehrere Rohre vorkonfektioniert werden, so dass ein Gittermodul (Gitterelement mit Rohr) werksseitig vorgefertigt und bis vor Ort transportiert wird, wo das Stahlbeton-Fertigteil gegossen wird. Die Rohre benachbarter Gitterelemente werden fluidmäßig direkt bzw. über Sammelrohre oder Verteiler miteinander verbunden.

Mit der Erfindung wird also ein Abstandshalter für Stahlbeton-Bauteile vorgeschlagen, der neben der Funktion der Abstandshalterung eines Bewehrungselements des Stahlbeton-Fertigteils auch der Fixierung von Rohren dient.

Durch die Ausbildung des Abstandshalters als (mehr oder weniger großflächiges) Gitterelement kann das Auslegen der Schalung mit dem Abstandshalter schnell und unkompliziert erfolgen. Da die Rohre bereits auf den Gitterelementen vormontiert sein können, ist vor Ort lediglich noch eine den entsprechenden Anforderungen an die Größe und die Anzahl der unterschiedlichen Tempericrkreisläufe entsprechende Verbindung der Rohre erforderlich. Mithin ist also die Montage sowohl des Bewehrungssystems als auch der Rohre des Stahlbeton-Bauteils deutlich vereinfacht.

Bei Verwendung des erfindungsgemäßen Abstandshalters bilden sich dessen (erste) Auflagepunkte, über die der Abstandshalter auf der Schalung aufliegt, bei dem fertigen Produkt, nämlich dem (Stahlbeton-)Fertigteil an einer Außenseite derselben (im Regelfall dessen Unterseite) ab. Durch diesen "Abdruck" der Auflagepunkte wird ein Muster sichtbar, anhand dessen sich die Rohrführung nachvollziehen lässt, wodurch es wiederum möglich ist, die von Rohren freien Bereiche lokalisieren zu können, innerhalb derer in das Fertigteil ohne die Gefahr, die Rohre zu beschädigen, Bohrungen, Durchbrüche o.dgl. eingebracht werden können.

In vorteilhafter Weiterbildung der Erfindung ist vorgesehen, dass sich je nach Ausrichtung des Gitterelements die Rohrhalteebene in einem von zwei unterschiedlichen Abständen zur Schalung und damit zur Außenseite des Stahlbeton-Fertigteils befindet. Hierzu weist das Gitterelement auch an seiner zweiten Seite Auflagepunkte auf, die eine zweite Auflageebene definieren. Der Abstand der Rohrhalteebene zu der ersten Auflageebene ist von dem Abstand der Rohrhalteebene zur zweiten Auflageebene verschieden. Der kleinere der beiden Abstände ist bestimmt durch den Betongrößtkorndurchmesser, so dass stets garantiert ist, dass der Beton und dessen Zuschlagstoffe bis in den Raum zwischen dem Rohr und der Schalung gelangt.

Bei der zuvor beschriebenen Variante des Abstandshalters sind also auf der zweiten Seite des Gitterelements zwei Ebenen definiert, nämlich die (zweite) Auflageebene und die Stützebene für das Bewehrungselement Die Abstützebene kann sich in diesem Zustand des Gitterelements zwischen der Rohrhalteebene und der zweiten Auflageebene befinden oder kann (alternativ) mit der zweiten Auflageebene zusammenfallen Im erstgenannten Fall kann die Stützebene für das Bewehrungselement durch die Streben bzw. die Seitenkanten der Streben definiert sein, wobei es zweckmäßig ist, die zweite Auflageebene durch von den Streben vorstehenden Vorsprüngen zu definieren. Diese Vorsprünge ragen somit über das Bewehrungselement nach oben hinaus, wenn der Abstandshalter mit der ersten Auflageebene seines Gitterelements auf der Schalung aufliegt. Wird das Gitterelement um demgegenüber 180° verdreht mit seiner zweiten Auflageebene auf die Schalung aufgelegt, so dienen wiederum die Streben des Gitterelements auf der dann nach oben weisenden Seite der Auflage des Bewehrungselements. Im Falle des Zusammenfalles von zweiter Auflageebene und Bewehrungselement-Abstützebene können diese auch durch die Vorsprünge definiert sein.

Die erste Auflageebene wird zweckmäßigerweise von einigen der Streben des Gitterelements definiert, die mit ihren Seitenrändern oder -kanten auf der Schalung aufliegen. Diese zur Auflage auf der Schalung vorgesehenen Streben sind zweckmäßigerweise über das Gitterelement verteilt angeordnet. Damit kommt es in sämtlichen Bereichen des Gitterelements zu einer ausreichenden Abstützung gegenüber der Schalung.

In vorteilhafter Weiterbildung der Erfindung ist ferner vorgesehen, dass die Rohraufnahmen als Aussparungen in den Streben ausgebildet sind. Bei diesen Aussparungen handelt es sich beispielsweise um Vertiefungen, die in die Seitenränder bzw. Seitenkanten der Streben eingebracht sind. Die Rohre können in diesen Aussparungen klemmend gehalten sein. Vorteilhaft ist es, wenn benachbart zu zumindest einigen der Aussparungen Um- bzw. Übergreifvorsprünge zum Um- bzw. Übergreifen des Rohres in einem Bereich angeordnet sind, der sich benachbart zu dem sich durch die Aussparung erstreckenden Rohrabschnitt befindet. Die Vorsprünge können elastisch ausgebildet sein, so dass sie beim Eindrücken des Rohres in eine Aussparung nachgeben, um sich anschließend zurückzustellen und das Rohr zu Übergreifen, wenn dieses vollständig in die Aussparung eingedrückt ist.

Alternativ können die ersten Auflagepunkte von Betonauflageelementen gebildet sein, die an dem Gitterelement angebracht sind, und zwar unregelmäßig verteilt über das Gitterelement. Mit dieser Variante des Abstandshalters lassen sich Sichtbeton-Fertigtcile herstellen, ohne dass die Betonauflageelemente optisch störend in der sichtbaren (Außen-)Seite des Fertigteils erkennbar sind. Die Betonauflageelemente sind innerhalb ihres in der Seite des Stahlbeton-Fcrtigteils liegenden Bereichs derart beschaffen, dass sie die Farbe des Fertigteils aufweisen. Dies kann einerseits dadurch realisiert werden, dass die Betonauflageelcmente aus Beton bestehen oder aber in dem oben genannten Bereich mit einer der Farbgebung des Betons des Sichtbeton-Fertigteils entsprechenden Beschichtung versehen sind. Durch die unregelmäßige Anordnung der Betonauflageelemente fallen diese bei Betrachtung des Sichtbeton-Fertigteils kaum bzw. gar nicht auf. Durch die relative Positionierung der Betonauflageelemente an dem Gitterelement, d.h. durch Wahl des Überstandes der Betonauflageelemente über die Streben und gegebenenfalls Randabschnitte des Gitterelements lässt sich überdies die Höhe, in der die Rohrhalteebene angeordnet ist, vorgeben.

Ein stahlbeton-Bauteil, bei dem es sich insbesondere um einen Betonfußboden oder um eine Stahlbotondecke handelt und das einen Abstandshalter gemäß einem der Ansprüchen 1 bis 9 aufweist, ist demzufolge erfindungsgemäß versehen mit
- einer Seitenfläche,
- mindestens einem Bewehrungselement und
- einem mit dem Bewehrungselement in Kontakt stehenden Abstandshalter mit von dessen mindestens einem Gitterelement gehaltenem Rohr, das von einem temperierbaren Medium durchströmbar ist,
- wobei je nach Ausrichtung des Gitterelements dessen erste oder zweite Auflagepunkte in der Seitenfläche des Stahlbeton-Fertigteils angeordnet sind.

Nachfolgend werden anhand der Figuren Ausführungsbeispiele der Erfindung näher erläutert. Im einzelnen zeigen:
- Fig. 1: eine Draufsicht auf einen gitterförmigen Abstandshalter gemäß einem ersten Ausführungsbeispiel der Erfindung mit an dieses angrenzenden, teilweise dargestellten benachbarten Gitterelementen,
- Fig. 2: einen Schnitt entlang der Linie II-II der Fig. 1 mit aufliegendem Bewehrungsgitter,
- Fig. 3: eine Schnittansicht entlang der Linie III--III der Fig. 1,
- Fign. 4 und 5: Schnittansichten entsprechend denen der Fign. 2 und 3 jedoch bei Ausrichtung des Gitterelements gemäß Fig. 1 nach einer 180°-Drehung um eine in der Zeichnungsebene von Fig. 1 liegende Achse,
- Fig. 6: einen Schnitt durch das in einer Schalung angeordnete Bewehrungssystem unter Verwendung mehrerer gitterförmiger Abstandshalter gemäß Fig. 1,
- Fig 7: eine Draufsicht auf den Abstandshalter gemäß Fig. 1 jedoch mit geringfügiger Modifikation der die untere Auflageebene definierenden Auflageelemente und
- Fig. 8: eine Schnittansicht entlang der Linie VIII-VIII der Fig. 7.

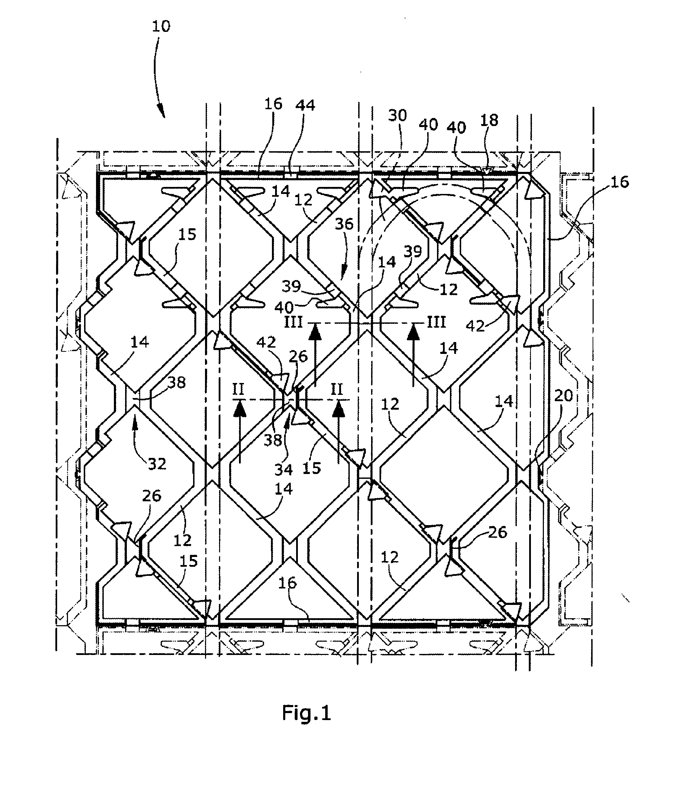

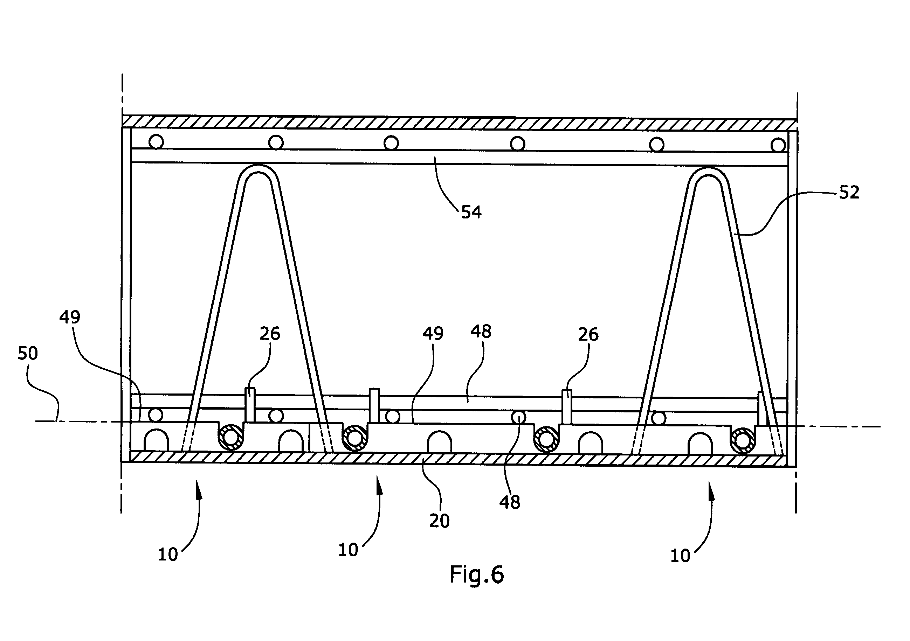

Fig 1 zeigt in Draufsicht ein Ausführungsbeispiel eines (z.B. vor Ort gegossenen) Gitterelements 10 aus Kunststoff, das als Abstandshalter für das untere Bewehrungselement einer Stahlbetondecke dient (siehe beispielsweise Fig. 6). Das Gitterelement 10 gemäß Fig. 1 ist mit zwei Gruppen von sich kreuzenden Streben versehen, wobei eine Vielzahl von ersten Streben 12 parallel oder winklig zueinander verlaufen und eine zweite Gruppe von Streben 14,15 ebenfalls parallel untereinander und quer zu den ersten Streben 12 verlaufen können. Längs des Umfangs des Gitterelements 10 erstrecken sich Randabschnitte 16, die in diesem Ausführungsbeispiel als Schwalbenschwanzvorsprünge 18 bzw. Schwalbenschwanzvertiefungen 20 ausgebildete Verbindungsstrukturen aufweisen, die komplementär zueinander ausgebildet sind und der Kopplung benachbarter Gitterelemente 10 dienen, was in Fig. 1 angedeutet ist,

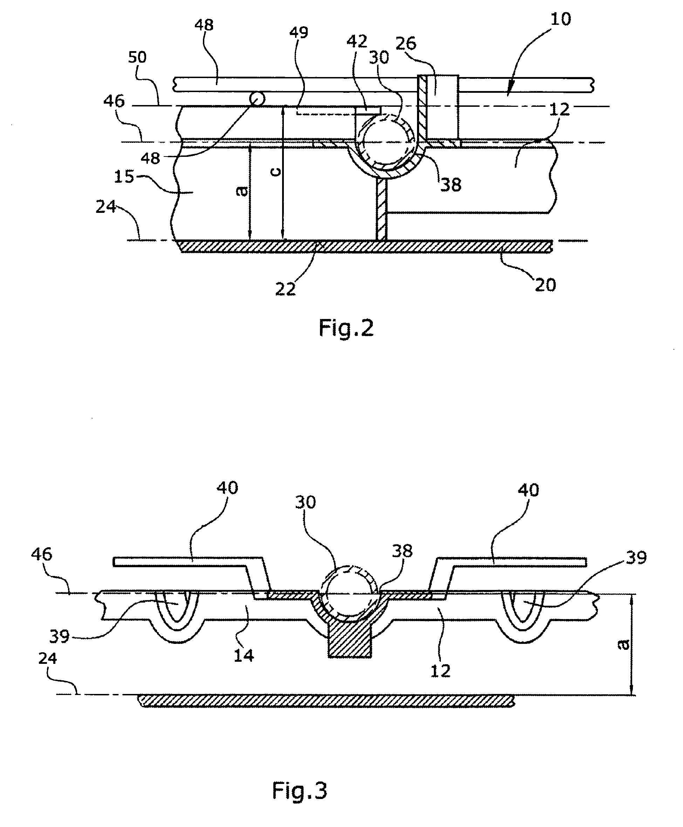

Wie man anhand der Schnittansichten der Fign. 2 und 3 erkennen kann, weisen die Streben 15 der ersten Gruppe von Streben eine größere Höhe als die Streben 14 dieser zweiten Gruppe (und auch die der ersten Streben 12) auf. Damit liegt das Gitterelement 10, wie ebenfalls anhand der Fign. 2 und 3 zu erkennen ist, über die Streben 15 auf einem Untergrund, beispielsweise einer Schalung 20, auf. Die unteren Seitenkanten bzw. Seitenränder 22 der Streben 15 der ersten Gruppen bilden also die Auflagepunkte, die eine erste Auflageebene 24 des Gitterelements 10 definieren. Durch die von der ersten Auflageebene 24 beabstandeten Streben 14 der zweiten Gruppe und der Streben 12 der ersten Gruppe kann der Anteil an (Kunststoff-)Material für das Gitterelement 10 reduziert werden. Außerdem sind damit nur wenige (nämlich nur die die Auflageebene 24 definierenden Ränder der Streben 15) Auflagepunkte bzw. -linien von außen an der (Unterseite der) Stahlbetondecke zu erkennen. Dies ist sowohl im Hinblick auf das Aussehen als auch das Einhalten von Brandschutzvorschriften von vorteil. Die Randabschnitte 16 sind zweckmäßigerweise ebenfalls an ihren unteren die Auflageebene 24 ebenfalls definierenden Rändern mit Aussparungen versehen, um dadurch die Menge an Kunststoffmaterial des Gitterelements 10 weiter zu reduzieren.

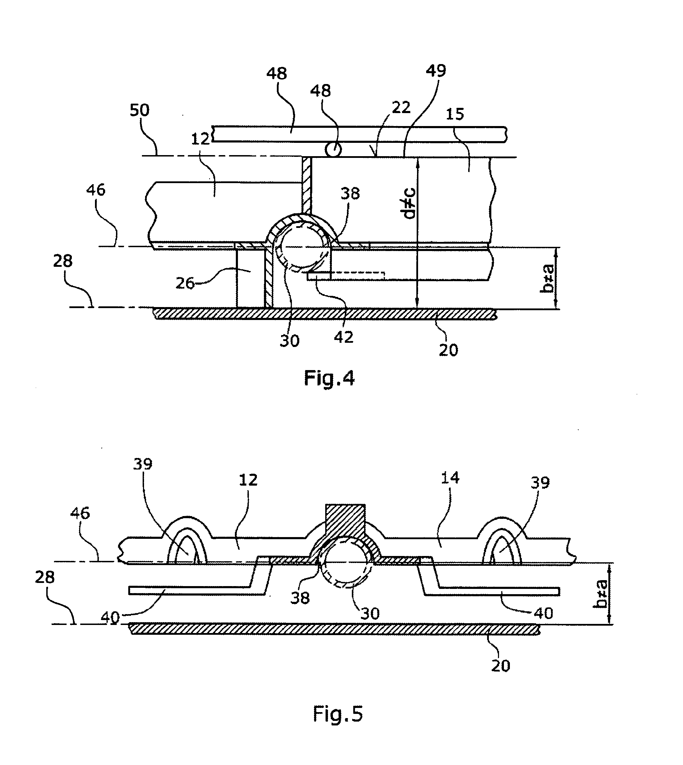

Über das Gitterelement 10 verteilt angeordnet sind zweite Auflagepunkte 26 (siche die Fign. 1. bis 5), die den die Auflagepunkte bildenden Seitenrändern 22 abgewandt sind und eine zweite Auflageebene 28 definieren, über die das Gitterelement 10 auf einem Untergrund wie beispielsweise der Schalung 20 aufliegt, wenn das Gitterelement gegenüber der Ausrichtung gemäß Fig. 1 um 180° gedreht ist (siehe Fign. 4 und 5).

Wie ferner in den zuvor angesprochenen Figuren angedeutet, dient das Gitterelement 10 auch der Fixierung eines Rohres 30. Das Gitterelement 10 weist hierzu eine Vielzahl von unterschiedlich ausgestalteten Rohraufnahmen 32,34,36 auf, die jeweils als entweder in die Kreuzungspunkte der Streben oder längs dieser Streben eingebrachte Vertiefungen 38,39 ausgebildet sind. Benachbart zu einigen dieser Aussparungen (nämlich der Aussparungen 34 und 36) erstrecken sich seitwärts der Streben Übergreifvorsprünge 40,42, die eine Rohrniederhalte- bzw. je nach Ausrichtung eine Rohruntergreiffunktion innehaben. Aussparungen 44 sind auch in einigen der Randabschnitte 16 des Gitterelements 10 eingebracht, um beispielsweise ein Rohr seitlich von dem Gitterelement 10 zu einem benachbarten Gitterelement oder nach außen führen zu können.

Wie man anhand der Fign. 2 bis 5 erkennen kann, befindet sich die Rohrhalteebene 46, innerhalb derer das Rohr 30 verläuft, in Abhängigkeit von der Ausrichtung der Gittermatte 10 in unterschiedlichen Höhen a und b oberhalb des Untergrundes (Schalung 20).

Fig. 6 verdeutlicht die Anordnung der Gitterelemente 10 innerhalb einer Schalung 20 zum Stützen des unteren gitterförmigen Bewehrungselements 48 eines Bewehrungssystems für eine Stahlbetondecke Die Gitterelemente 10 sind mit Rohren 30 versehen und liegen auf der (unteren) Schalung 20 auf. Auf den Gitterelementen 10 ruht das gitterförmige Bewehrungselement 48; insoweit definieren also die Seitenränder der Streben 12,14,15 bzw. der Randabschnitte 16 die Abstützpunkte 49, die wiederum die Abstützebene 50 für das untere Bewehrungselement 48 definieren. Auf der Schalung 20 befinden sich ferner weitere Abstandshalter 52 zur Stützung des oberen gitterförmigen Bewehrungselements 54.

Anhand der Fign. 2 und 4 ist erkennbar, dass sich die Abstützebenen 50 je nach Ausrichtung des Gitterelements 10 in unterschiedlichen Höhen c und d oberhalb des Untergrundes (Schalung 20) befinden.

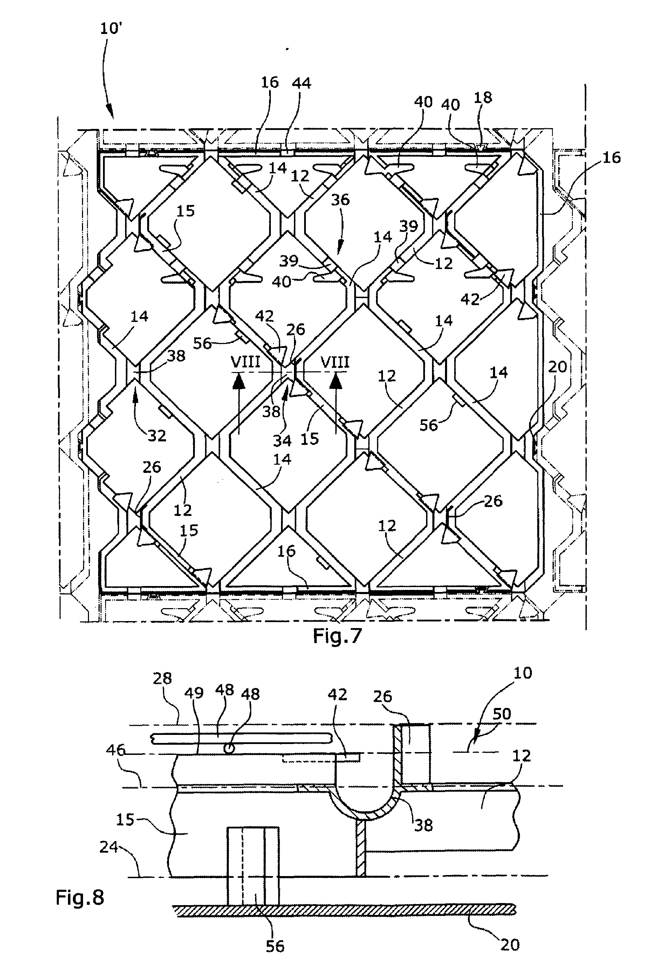

In den Fign. 7 und 8 ist ein alternatives Ausführungsbeispiel eines Gitterelements 10' gezeigt. Konstruktiv bzw. funktional den Einzelteilen des Gitterelements 10 entsprechende bzw. identische Teile des Gitterelements 10' sind in den Fign. 7 und 8 mit den gleichen Bezugszeichen wie in den Fign. 1 bis 5 gekennzeichnet.

Das Gitterelement 10' der Fign. 7 und 8 ist mit einem gegenüber dem Gitterelement 10 modifizierten Auflagesystem zur Auflage des Gitterelements 10' auf einem Untergrund wie beispielsweise der Schalung 20 versehen. Die erste Auflageebene 24 wird bei dem Gitterelement 10' durch einzelne Auflageelemente 56 definiert, die an den Streben des Gitterelements 10' befestigt sind und seitlich über die Streben in Richtung auf den Untergrund überstehen, wie in Fig. 8 gezeigt. Die Verteilung dieser Auflageelemente 56 ist unregelmäßig. Die Auflageelemente 56 sind bei einer Ausbildung der Streben 12,14 und 15 mit unterschiedlichen Höhen, wie im Zusammenhang mit dem Gitterelement 10 der Fign. 1 bis 5 oben beschrieben, vorteilhafterweise an den Streben 15 angebracht. Die Anbringung der Auflageelemente 56 erfolgt insbesondere durch ein Verkleben. Die Auflageelemente 56 sind aus Betonwerkstoff, so dass sie an beispielsweise der Unterseite eines Stahlbeton-Fertigteils kaum optisch auffallen. Hierzu trägt auch die ungleichmäßige Verteilung der Auflageelemente 56 bei.

Bei Ausbildung des Gitterelements 10' mit den Auflageelementen 56, wie im Zusammenhang mit den Fign. 7 und 8 gezeigt und beschrieben, erfordert nicht notwendigerweise das Ausbilden der Vorsprünge 26. Die Höhe der Rohrhalteebene 46 gegenüber dem Untergrund (beispielsweise Schalung 20) kann durch entsprechende Wahl des Überstandes der Auflageelemente 56 relativ zu den Streben 15 definiert werden.

## Patentansprüche

1. Abstandshalter für ein Bewehrungselement eines Stahlbeton-Bauteils, insbesondere einer Stahlbetondecke, mit
- mindestens einem Gitterelement (10,10'), das zwei Gruppen sich kreuzender Streben aufweist, wobei eine Vielzahl von ersten Streben (12) parallel oder winklig zueinander verlaufen und eine Gruppe von zweiten Streben (14,15) ebenfalls parallel untereinander und quer zu den ersten Streben (12) verlaufen,
- wobei das Gitterelement (10,10') eine erste Seite mit eine erste Auflageebene (24) definierenden ersten Auflagepunkten (22) zur Auflage auf einer Schalung (20) zur Herstellung des Stahlbeton-Fertigteils und eine der ersten Seite gegenüberliegende zweite Seite mit eine Stützebene (50) definierenden Abstützpunkten (49) zur Abstützung eines Bewehrungselements (48) eines Stahlbeton-Fertigteils aufweist, und
- wobei die ersten und zweiten Streben (12,14,15) mit eine Rohrhalteebene (46) definierenden Rohraufnahmen (32,34,36) zur Aufnahme und Fixierung eines von einem temperierbaren Medium durchströmbaren Rohres (30) versehen sind,
**dadurch gekennzeichnet, dass** eine Vielzahl von zweiten Streben (14) jeweils einen Abstand zur ersten Auflageebene (24) aufweisen und die anderen zweiten Streben (15) die ersten Auflagepunkte (22) der ersten Auflageebene (24) aufweisen.

2. Abstandshalter nach Anspruch 1, **dadurch gekennzeichnet, dass** die zweite Seite des Gitterelements (10,10') mit eine zweite Auflageebene (28) definierenden zweiten Auflagepunkten (26) zur Auflage auf einer Schalung (20) zur Herstellung eines Stahlbeton-Fertigteils versehen ist und dass die Rohrhalteebene (46) außermittig zwischen den beiden Auflageebenen (24,28) des Gitterelements (10,10') angeordnet ist.

3. Abstandshalter nach Anspruch 2, **dadurch gekennzeichnet, dass** die Abstützebene für das Bewehrungselement (50) zwischen der Rohrhalteebene (46) und der zweiten Auflageebene (28) angeordnet ist oder mit der zweiten Auflageebene (28) zusammenfällt.

4. Abstandshalter nach einem der Ansprüche 1 bis 3, **dadurch gekennzeichnet, dass** im Randbereich des Gitterelements (10,10') miteinander verbindbare Verbindungsstrukturen (18,20) zur Verbindung gleicher, benachbarter Gitterelemente (10,10') ausgebildet sind.

5. Abstandshalter nach einem der Ansprüche 1 bis 4, **dadurch gekennzeichnet, dass** die ersten Auflagepunkte (22) von einigen der zweiten Streben (15) des Gitterelements (10,10') gebildet sind, wobei diese zweiten Streben (15) über das Gitterelement (10,10') verteilt angeordnet sind.

6. Abstandshalter nach einem der Ansprüche 1 bis 4, **dadurch gekennzeichnet, dass** die ersten Auflagepunkte (22') von Betonauflageelementen (56) gebildet sind, die an dem Gitterelement (10') angebracht sind, und dass die Betonauflageelemente (56) unregelmäßig verteilt an dem Gitterelement (10') angeordnet sind.

7. Abstandshalter nach einem der Ansprüche 1 bis 5, **dadurch gekennzeichnet, dass** die die ersten Auflagepunkte (22) definierenden zweiten Streben (15) im wesentlichen parallel zueinander verlaufen.

8. Abstandshalter nach einem der Ansprüche 1 bis 7, **dadurch gekennzeichnet, dass** die Rohraufnahmen (32,34,36) als Aussparungen (38,39) in den ersten und zweiten Streben (12,14,15) ausgebildet sind und herausfallsicher das Rohr (30) fixieren.

9. Abstandshalter nach Anspruch 8, **dadurch gekennzeichnet, dass** benachbart zu zumindest einigen der Aussparungen (38,39) Umgreifvorsprünge (40,42) zum Übergreifen des Rohres (30) benachbart zu dessen sich durch die Aussparung (38,39) erstreckenden Abschnitts angeordnet sind.

10. Stahlbeton-Bauteil, insbesondere Stahlbetondecke, mit
- einer Seitenfläche,
- mindestens einem Bewehrungselement (48) und
- einem mit dem Bewehrungselement (48) in Kontakt stehenden Abstandshalter nach einem der vorhergehenden Ansprüche mit von dessen mindestens einem Gitterelement (10,10') gehaltenem Rohr (30), das von einem temperierbaren Medium durchströmbar ist,
- wobei je nach Ausrichtung des Gitterelements (10,10') dessen erste oder zweite Auflagepunkte (22,26) in der Seitenfläche des Stahlbeton-Fertigteils angeordnet sind.

## Claims

1. Spacer for a reinforcing element of a reinforced-concrete element, in particular a reinforced-concrete floor, with
- at least one lattice element (10, 10') which has two groups of intersecting struts, wherein a multiplicity of first struts (12) run parallel or at an angle to one another and a group of second struts (14, 15) likewise run parallel to one another and transversely with respect to the first struts (12),
- wherein the lattice element (10, 10') has a first side with first bearing points (22), which define a first bearing plane (24), for resting on a formwork (20) for producing the reinforced-concrete finished part, and a second side which is opposite the first side and has supporting points (49), which define a supporting plane (50), for supporting a reinforcing element (48) of a reinforced-concrete finished part, and
- wherein the first and second struts (12, 14, 15) are provided with pipe receptacles (32, 34, 36) which define a pipe-holding plane (46) and are intended for receiving and fixing a pipe (30) through which a temperature-controllable medium can flow, **characterized in that** a multiplicity of second struts (14) are each at a distance from the first bearing plane (24), and the other second struts (15) have the first bearing points (22) of the first bearing plane (24).

2. Spacer according to Claim 1, **characterized in that** the second side of the lattice element (10, 10') is provided with second bearing points (26), which define a second bearing plane (28), for resting on a formwork (20) for producing a reinforced-concrete finished part, and **in that** the pipe-holding plane (46) is arranged eccentrically between the two bearing planes (24, 28) of the lattice element (10, 10').

3. Spacer according to Claim 2, **characterized in that** the supporting plane for the reinforcing element (50) is arranged between the pipe-holding plane (46) and the second bearing plane (28) or coincides with the second bearing plane (28).

4. Spacer according to one of Claims 1 to 3, **characterized in that** interconnectable connecting structures (18, 20) are formed in the edge region of the lattice element (10, 10') for the connection of identical, adjacent lattice elements (10, 10').

5. Spacer according to one of Claims 1 to 4, **characterized in that** the first bearing points (22) are formed by some of the second struts (15) of the lattice element (10, 10'), wherein said second struts (15) are arranged distributed over the lattice element (10, 10').

6. Spacer according to one of Claims 1 to 4, **characterized in that** the first bearing points (22') are formed by concrete bearing elements (56) which are attached to the lattice element (10'), and **in that** the concrete bearing elements (56) are arranged in an irregularly distributed manner on the lattice element (10').

7. Spacer according to one of Claims 1 to 5, **characterized in that** the second struts (15) defining the first bearing points (22) run substantially parallel to one another.

8. Spacer according to one of Claims 1 to 7, **characterized in that** the pipe receptacles (32, 34, 36) are designed as cutouts (38, 39) in the first and second struts (12, 14, 15) and fix the pipe (30) in a manner secure against the latter dropping out.

9. Spacer according to Claim 8, **characterized in that** encompassing projections (40, 42) for overlapping the pipe (30) adjacent to the section thereof extending through the cutout (38, 39) are arranged adjacent to at least some of the cutouts (38, 39).

10. Reinforced-concrete element, in particular reinforced-concrete floor, with
- a side surface,
- at least one reinforcing element (48) and
- a spacer according to one of the preceding claims that is in contact with the reinforcing element (48) and has a pipe (30) which is held by the at least one lattice element (10, 10') thereof and through which a temperature-controllable medium can flow,
- wherein, depending on the orientation of the lattice element (10, 10'), the first or second bearing points (22, 26) thereof are arranged in the side surface of the reinforced-concrete finished part.

## Revendications

1. Distanceur pour un élément d'armature d'un élément de construction en béton armé, en particulier d'un plancher en béton armé, avec
- au moins un élément de treillis (10, 10'), qui présente deux groupes de barres qui se croisent, dans lequel une multiplicité de premières barres (12) s'étendent parallèlement ou en oblique les unes par rapport aux autres et un groupe de deuxièmes barres (14, 15) s'étendent également parallèlement les unes aux autres et transversalement par rapport aux premières barres (12),
- dans lequel l'élément de treillis (10, 10') présente un premier côté avec des premiers points d'appui (22) définissant un premier plan d'appui (24) pour l'appui sur un coffrage (20) destiné à la fabrication de la pièce préfabriquée en béton armé et un deuxième côté opposé au premier côté avec des points de support (49) définissant un plan de support (50) pour supporter un élément d'armature (48) d'une pièce préfabriquée en béton armé, et
- dans lequel les premières et deuxièmes barres (12, 14, 15) sont munies de logements de tubes (32, 34, 36) définissant un plan de maintien de tube (46) pour la réception et la fixation d'un tube (30) pouvant être parcouru par un fluide d'égalisation de la température,
**caractérisé en ce qu'**une multiplicité de deuxièmes barres (14) présentent respectivement une distance par rapport au premier plan d'appui (24) et les autres deuxièmes barres (15) présentent les premiers points d'appui (22) du premier plan d'appui (24).

2. Distanceur selon la revendication 1, **caractérisé en ce que** le deuxième côté de l'élément de treillis (10, 10') est muni de deuxièmes points d'appui (26) définissant un deuxième plan d'appui (28) pour l'appui sur un coffrage (20) destiné à la fabrication d'une pièce préfabriquée en béton armé et **en ce que** le plan de maintien de tube (46) est disposé en position excentrée entre les deux plans d'appui (24, 28) de l'élément de treillis (10, 10').

3. Distanceur selon la revendication 2, **caractérisé en ce que** le plan de support pour l'élément d'armature (50) est disposé entre le plan de maintien de tube (46) et le deuxième plan d'appui (28) ou coïncide avec le deuxième plan d'appui (28).

4. Distanceur selon l'une quelconque des revendications 1 à 3, **caractérisé en ce que** des structures de liaison (18, 20) pouvant être reliées entre elles sont formées dans la région de bord de l'élément de treillis (10, 10') pour la liaison d'éléments de treillis identiques voisins (10, 10').

5. Distanceur selon l'une quelconque des revendications 1 à 4, **caractérisé en ce que** les premiers points d'appui (22) sont formés par quelques-unes des deuxièmes barres (15) de l'élément de treillis (10, 10'), dans lequel ces deuxièmes barres (15) sont disposées de façon répartie sur l'élément de treillis (10, 10').

6. Distanceur selon l'une quelconque des revendications 1 à 4, **caractérisé en ce que** les premiers points d'appui (22') sont formés par des éléments d'appui en béton (56), qui sont placés sur l'élément de treillis (10'), et **en ce que** les éléments d'appui en béton (56) sont disposés selon une répartition non uniforme sur l'élément de treillis (10').

7. Distanceur selon l'une quelconque des revendications 1 à 5, **caractérisé en ce que** les deuxièmes barres (15) définissant les premiers points d'appui (22) s'étendent essentiellement parallèlement les unes aux autres.

8. Distanceur selon l'une quelconque des revendications 1 à 7, **caractérisé en ce que** les logements de tubes (32, 34, 36) sont réalisés par des encoches (38, 39) dans les premières et deuxièmes barres (12, 14, 15) et fixent le tube (30) en l'empêchant de tomber.

9. Distanceur selon la revendication 8, **caractérisé en ce que** des saillies d'accrochage (40, 42) sont disposées à proximité d'au moins quelques-unes des encoches (38, 39) pour l'accrochage du tube (30) à proximité de sa partie s'étendant à travers l'encoche (38, 39).

10. Elément de construction en béton armé, en particulier plancher en béton armé, avec
- une face latérale,
- au moins un élément d'armature (48), et
- un distanceur selon l'une quelconque des revendications précédentes se trouvant en contact avec l'élément d'armature (48), avec un tube (30) maintenu par son au moins un élément de treillis (10, 10'), qui peut être parcouru par un fluide d'égalisation de la température,
- dans lequel, selon l'orientation de l'élément de treillis (10, 10'), ses premiers ou ses deuxièmes points d'appui (22, 26) sont disposés dans la face latérale de la pièce préfabriquée en béton armé.
